# EUROPÄISCHE PATENTSCHRIFT

(11) **EP 3 019 368 B1**
(45) Veröffentlichungstag und Bekanntmachung des Hinweises auf die Patenterteilung: **24.07.2019**
(21) Anmeldenummer: 14734783.5
(22) Anmeldetag: 25.06.2014
(51) Int. Cl.: F16D 41/08, B60N 2/16, F16D 41/10, B60N 2/90

(54) **VERSTELLUNGSANTRIEB, INSBESONDERE HÖHENVERSTELLUNGSANTRIEB EINES FAHRZEUGSITZES MIT EINER FANGVORRICHTUNG**
ADJUSTING DRIVE, IN PARTICULAR HEIGHT-ADJUSTING DRIVE FOR A VEHICLE SEAT AND HAVING A CATCH DEVICE
COMMANDE DE RÉGLAGE, EN PARTICULIER COMMANDE DE RÉGLAGE EN HAUTEUR D'UN SIÈGE DE VÉHICULE, COMPRENANT UN DISPOSITIF D'ARRÊT

(30) Priorität: 11.07.2013 DE 102013011515; 02.10.2013 DE 102013016289
(43) Veröffentlichungstag der Anmeldung: 18.05.2016
(73) Patentinhaber: Adient Luxembourg Holding S.à r.l., 1855 Luxembourg (LU)
(72) Erfinder: STEMMER, Jürgen, 42897 Remscheid (DE); GERDT, Dmitrij, 50670 Köln (DE)
(74) Vertreter: Kutzenberger Wolff & Partner
(86) Internationale Anmeldenummer: PCT/EP2014/063383
(87) Internationale Veröffentlichungsnummer: WO 2015/003905

(56) Entgegenhaltungen:
- WO-A1-03/066369
- DE-A1- 19 854 945
- DE-A1-102006 026 392
- US-A- 6 149 235
- US-A1- 2003 173 182

## Beschreibung

Die vorliegende Erfindung betrifft einen Verstellungsantrieb, insbesondere einen Höhenverstellungsantrieb, eines Fahrzeugsitzes mit einem Antriebsteil, das mit einer Handhabe verbunden ist, und mit einem Abtriebsteil, das mit einem Versteller, beispielsweise dem Höhenversteller des Fahrzeugsitzes, verbunden ist, wobei zwischen dem Antriebsteil und dem Abtriebsteil ein Aktuator angeordnet ist, der von dem Antriebsteil drehend angetrieben wird und seinerseits das Abtriebsteil drehend antreibt.

Derartige Verstellungsantriebe, beispielsweise Höhenverstellungsantriebe, sind aus dem Stand der Technik hinlänglich bekannt und werden dazu eingesetzt, die Verstellung, insbesondere Höhenverstellung, eines Fahrzeugsitzes bzw. einer Sitzfläche eines Fahrzeugsitzes anzutreiben, mit der der Fahrzeugsitz an die Ergonomie des jeweiligen Sitzinsassen angepasst wird. Die Verstellungsantriebe, insbesondere Höhenverstellungsantriebe, gemäß dem Stand der Technik haben jedoch den Nachteil, dass sie zu viel Leerlauf aufweisen.

Ein gattungsbildender Verstellungsantrieb ist z. B. aus der WO 03/066369 A1 bekannt, der darauf abzielt, eine einfache, kostengünstige Kupplungskonstruktion zur Verwendung in Verbindung mit einem Regulierungsmecßhanismus einer Sitzanordnung zu realisieren. Aus der US 6 149 235 A ist eine Verstellungseinrichtung bekannt, bei deren Mechanismus bezüglich einer Drehrichtung ein Drehmoment zwischen einem Drehnocken mit Armen und einem gezahnten Ring übertragen wird; darüber hinaus weist das in der DE 198 54 945 A1 beschriebene Klemmrollenschaltwerk ein dreiarmiges Antriebsteil zusammen mit einem komplementär ausgebildeten Antriebsteil auf, wobei diese zwei Antriebsteile gegeneinander drehbar sind und jeweils mit den Klemmrollen in Kontakt stehen. Schließlich wirken die beim aus der DE 10 2006 026 392 A1 bekannten Schrittschaltwerk sternförmigen Federträger einerseits mit entsprechenden Klemmkörpern und andererseits mit dem Gehäusebauteil zusammen.

Es war deshalb die Aufgabe der vorliegenden Erfindung, einen Verstellungsantrieb, insbesondere Höhenverstellungsantrieb, zur Verfügung zu stellen, der die Nachteile des Standes der Technik nicht aufweist.

Gelöst wird die Aufgabe mit einem Verstellungsantrieb gemäß Anspruch 1, insbesondere einem Höhenverstellungsantrieb, eines Fahrzeugsitzes mit einem Antriebsteil, das mit einer Handhabe verbunden ist, und mit einem Abtriebsteil, das mit dem Versteller, insbesondere dem Höhenversteller, zusammenwirkt, wobei zwischen dem Antriebsteil und dem Abtriebsteil ein Aktuator angeordnet ist, der von dem Antriebsteil drehend angetrieben wird und seinerseits das Abtriebsteil drehend antreibt, wobei zwischen dem Aktuator und dem Abtriebsteil ein Mittel vorgesehen ist, das die Relativbewegung zwischen dem Aktuator und dem Abtriebsteil zumindest zeitweise zumindest vermindert.

Die vorliegende Erfindung betrifft den Antrieb einer Verstellung, insbesondere Höhenverstellung, im Innenraum eines Kraftfahrzeuges, beispielsweise der Verstellung, insbesondere Höhenverstellung, eines Fahrzeugsitzes, mit dem die Höhe der Sitzfläche des Fahrzeugsitzes, insbesondere zur Anpassung des Fahrzeugsitzes an die Kontur des jeweiligen Sitzinsassen, angepasst werden kann. Mit dem erfindungsgemäßen Verstellungsantrieb, insbesondere Höhenverstellungsantrieb, kann aber auch die Neigung des Fahrzeugsitzes und/oder der Sitzfläche und/oder die Längsposition des Fahrzeugsitzes verändert werden. Der erfindungsgemäße Verstellungsantrieb, insbesondere Höhenverstellungsantrieb, eignet sich aber auch für jede andere Verstellung im Innenraum eines Kraftfahrzeuges. Der erfindungsgemäße Verstellungsantrieb, insbesondere Höhenverstellungsantrieb, weist ein Antriebsteil auf, das mit einer Handhabe, beispielsweise einem Pumphebel oder einem Handrad, verbunden ist und von diesem drehend angetrieben wird. Dieses Drehmoment wird auf ein sich drehendes Abtriebsteil übertragen, das form- und/oder kraftschlüssig mit dem Versteller, beispielsweise dem Höhenversteller, verbunden ist. Zwischen dem Antriebsteil und dem Abtriebsteil ist ein sich drehender Aktuator vorgesehen, der von dem Antriebsteil angetrieben wird und sein Drehmoment auf das Abtriebsteil überträgt. Erfindungsgemäß ist nun zwischen dem Aktuator und dem Abtriebsteil ein Mittel vorgesehen, das die Relativbewegung zwischen dem Aktuator und dem Abtriebsteil, insbesondere zeitweise, zumindest vermindert, insbesondere verhindert. Dadurch wird vermieden, dass ein Abstand zwischen dem Aktuator und dem Abtriebsteil, der sich insbesondere dann einstellt, wenn das Antriebsteil nicht mehr mit einem Drehmoment beaufschlagt wird, eine ungewollte Größe erreicht. Wird dann das Antriebsteil wieder mit einem Drehmoment beaufschlagt, muss lediglich ein vergleichsweise kleiner oder kein Spalt überwunden werden, bevor der Verstellungsantrieb den Versteller wieder antreibt. Dadurch reagiert die Verstellung, beispielsweise die Höhenverstellung, schneller auf eine entsprechende Bewegung der Handhabe, was beispielsweise den Komfort des Sitzinsassen erhöht.

Vorzugsweise wird eine Relativbewegung zwischen dem Aktuator und dem Abtriebsteil in zwei entgegengesetzte Drehrichtungen, insbesondere zeitweise, zumindest vermindert.

Vorzugsweise handelt es sich bei dem Mittel zur Verminderung der Relativbewegung zwischen dem Aktuator und dem Abtriebsteil um ein Federmittel, das insbesondere drehfest oder einstückig mit dem Abtriebsteil verbunden ist.

Erfindungsgemäß weist das Mittel zur Verminderung der Relativbewegung zwischen dem Aktuator und dem Abtriebsteil mehrere Form- und/oder Kraftschlussmittel, beispielsweise in Form mehrerer Ein- und/oder Ausbuchtungen, auf, die vorzugsweise jeweils mit einer komplementären Ein- und/oder Ausbuchtung an und/oder in dem Aktuator, insbesondere rastend, zusammenwirken, wobei die Rastung vorzugsweise durch eine Relativbewegung zwischen dem Abtriebsteil und dem Aktuator erfolgt.

Das Form- und/oder Kraftschlussmittel kann sich sowohl am radialen inneren und/oder äußeren Umfang als auch in axialer Richtung - bezogen auf die Drehachse des Abtriebsteils - an dem Mittel zur Verminderung der Relativbewegung zwischen dem Aktuator und dem Abtriebsteil befinden.

Vorzugsweise handelt es sich bei dem Mittel um ein Blechteil, das vorzugsweise gebogen und/oder gestanzt ist und das insbesondere aus einem federnden Stahl gefertigt ist.

Erfindungsgemäß weist dieses Mittel eine Vielzahl von Form- und/oder Kraftschlussmitteln auf, die form- und/oder kraftschlüssig mit entsprechenden Form- und/oder Kraftschlussmitteln an dem Aktuator zusammenwirken.

Zusätzlich kann das Mittel zur Reduzierung der Relativbewegung zwischen dem Aktuator und dem Antriebsteil auch ein Reibschlussmittel sein, das zwischen dem Aktuator und dem Abtriebsteil wirkt.

Im Folgenden wird die Erfindung anhand der Figuren 1 - 8 erläutert. Diese Erläuterungen sind lediglich beispielhaft und schränken den allgemeinen Erfindungsgedanken nicht ein.
- **Figuren 1, 3 und 4**: zeigen die Antriebsseite eines Verstellungsantriebs, insbesondere Höhenverstellungsantriebs.
- **Figuren 2a und 2b**: zeigen die Abtriebsseite eines Verstellungsantriebs, insbesondere Höhenverstellungsantriebs.
- **Figur 5a**: zeigt einen Verstellungsantrieb, insbesondere Höhenverstellungsantrieb, gemäß dem Stand der Technik.
- **Figur 5b**: zeigt einen erfindungsgemäßen Verstellungsantrieb, insbesondere Höhenverstellungsantrieb.
- **Figur 6**: zeigt eine Explosionszeichnung eines erfindungsgemäßen Verstellungsantriebs, insbesondere Höhenverstellungsantriebs.
- **Figuren 7 und 8**: zeigen jeweils eine Ausführungsform des Mittels zur Verminderung der Relativbewegung zwischen dem Aktuator und dem Abtriebsteil.

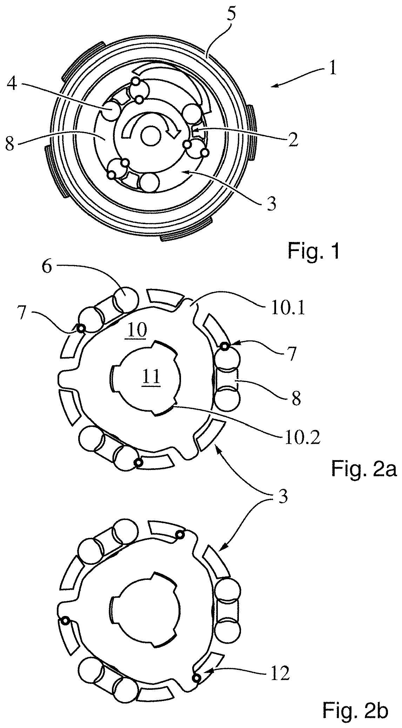

Figur 1 zeigt die Antriebsseite des Verstellungsantriebs, insbesondere Höhenverstellungsantriebs, 1. Dieser weist ein Antriebsteil 2 auf, das direkt oder indirekt mit einer Handhabe, beispielsweise einem Pumphebel, verbunden ist und von diesem, wie durch den Pfeil symbolisiert, drehend angetrieben wird. Diese Drehbewegung wird, wie ebenfalls durch den Pfeil dargestellt, in dem vorliegenden Fall mittels Wälzkörpern 4, die jeweils zwischen einem Teil des Gehäuses 5 und einem Zwischenelement 8, insbesondere einem federnden Zwischenelement, gelagert sind, auf einen Aktuator 3 übertragen. Der Fachmann versteht, dass der Antrieb des Aktuators auch durch jedes andere, dem Fachmann geläufige Mittel erfolgen kann.

Figuren 2a und 2b zeigen die Abtriebsseite des Verstellungsantriebs, insbesondere Höhenverstellungsantriebs. Wie insbesondere Figur 2a entnommen werden kann, entsteht durch die Drehung des Aktuators 3, hier im Uhrzeigersinn, zunächst ein Kontakt 7 zwischen dem Aktuator und den ebenfalls abtriebsseitig vorgesehenen Wälzkörpern 6, hier Kugeln, die dadurch insbesondere von einer verriegelnden in eine entriegelnde Stellung gebracht werden. Zwischen jeweils zwei Wälzkörpern 6 ist vorzugsweise jeweils ein Zwischenelement 9, insbesondere ein federndes Zwischenelement, vorgesehen. Der Aktuator weist für die Drehmomentübertragung auf der Abtriebsseite entsprechende Vorsprünge auf. Bei einer weiteren Drehung des Aktuators 3 erfolgt ein Kontakt 12 zwischen dem Aktuator und hier einem Drehmomentübertragungsmittel 10, das drehfest mit dem Abtriebsteil 11 verbunden ist. Der Fachmann versteht, dass das Drehmomentübertragungsmittel 10 auch einstückig mit dem Abtriebsteil 11 vorgesehen sein kann. Für den Kontakt und die Drehmomentübertragung zwischen dem Aktuator 3 und dem Drehmomentübertragungsmittel 10 weist dieses, hier an seinem äußeren Umfang, Form- und/oder Kraftschlussmittel 10.1 auf, die an den Stellen 12 mit dem Aktuator, insbesondere mit dessen Vorsprüngen, in Kontakt gebracht werden, wodurch das Drehmoment übertragen wird. Des Weiteren sind an dem inneren Umfang des Drehmomentübertragungsmittels 10 Form- und/oder Kraftschlussmittel 10.2 vorgesehen, die mit komplementären Form- und oder Kraftschlussmitteln an dem Abtriebsteil 11 zusammenwirken und dadurch ein Drehmoment von dem Mittel 10 auf das Abtriebsteil 11 übertragen.

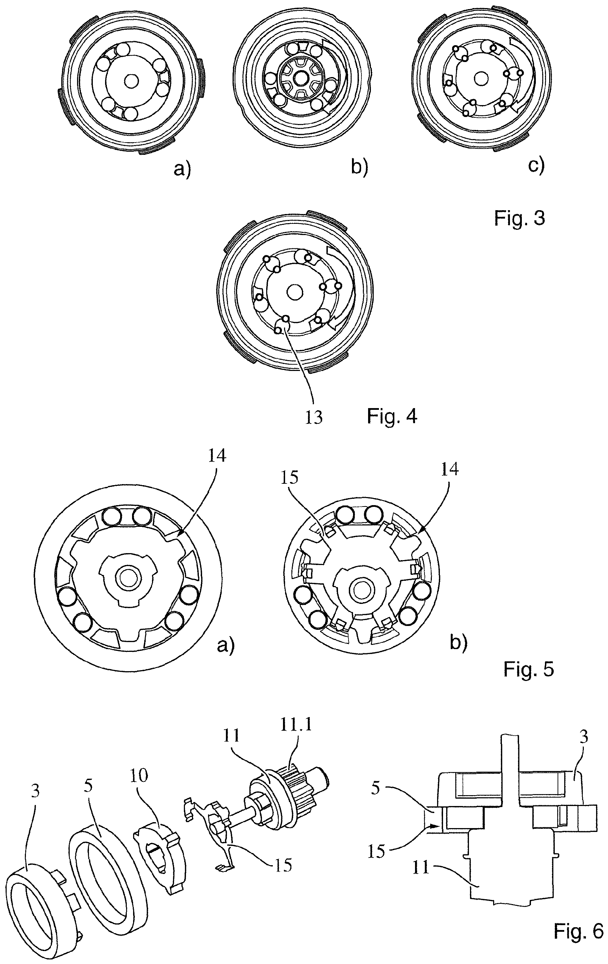

Figur 3 zeigt noch einmal die Antriebsseite des Verstellungsantriebs, insbesondere Höhenverstellungsantriebs. In Figur 3a ist eine Neutralposition dargestellt, in der kein Drehmoment von dem Antriebsteil auf den Aktuator übertragen wird. Sobald das Antriebsteil 2 im Uhrzeigersinn gedreht wird, werden die Wälzkörper 4 zwischen dem Gehäuse 5 und den Zwischenelementen 8 eingespannt und ein Drehmoment kann von dem Antriebsteil 2 auf den Aktuator 3 übertragen werden, was in Figur 3b dargestellt ist. Figur 3c zeigt eine Stellung, in der der Aktuator um 30° im Uhrzeigersinn gedreht worden ist.

Sobald der Hebel und damit das Antriebsteil wieder in die neutrale Position überführt wird (vgl. Figur 4), wird sich auch der Aktuator, beispielsweise durch die Reibung 13 zwischen dem Antriebsteil 2, den Wälzkörpern 4 und dem Aktuator 3, um einen gewissen Betrag, hier gegen den Uhrzeigersinn, verdrehen, wodurch ein Leerlauf entsteht, der nicht konstant ist, sondern zwischen einem sehr hohen und einem vergleichsweise geringen Betrag variieren kann.

Dieser Leerlauf ist in Figur 5a durch den vergleichsweise großen Spalt 14 zwischen dem Aktuator und dem Form- und/oder Kraftschlussmittel 10.1 am Umfang des Drehmomentübertragungsmittels 10 dargestellt.

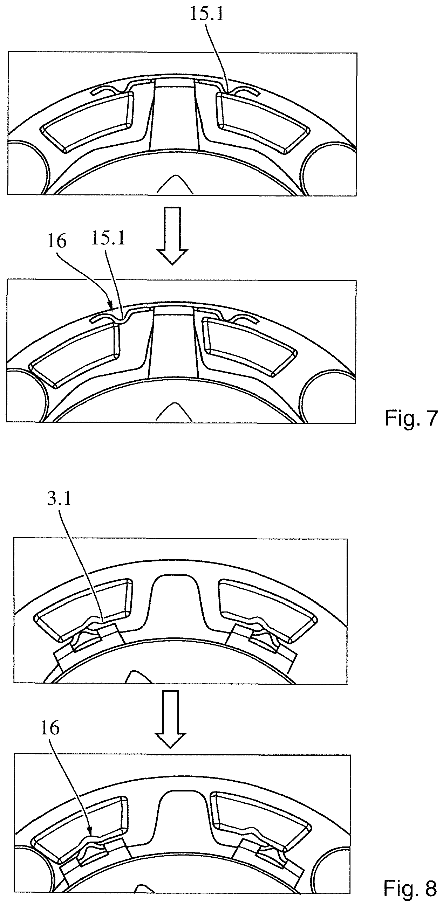

Um einen derartig großen Spalt und den damit verbundenen Leerlauf zu verhindern, schlägt die vorliegende Erfindung ein Mittel zur Verminderung der Relativbewegung zwischen dem Aktuator 3 und dem Abtriebsteil 11 bzw. dem Drehmomentübertragungsmittel 10 vor. Dieses Mittel 15 ist in dem vorliegenden Fall ein gebogenes und/oder gestanztes Blechteil, das insbesondere aus Federstahl vorgesehen ist und das drehfest mit dem Abtriebsteil 11 verbunden ist. Wie insbesondere den Figuren 7 und 8 entnommen werden kann, weist das Mittel 15 Form- und/oder Kraftschlussmittel 15.1 auf, die vorzugsweise rastend in komplementäre Form- und/oder Kraftschlussmittel an dem Aktuator eingreifen oder sich an diese anlegen, sobald sich der Aktuator relativ zu dem Abtriebsteil bewegt. Dadurch wird die Relativbewegung zwischen dem Aktuator und dem Abtriebsteil zumindest vermindert, so dass der Spalt 14 (vgl. Figur 5b) im Vergleich zu dem Spalt gemäß einem Verstellungsantrieb, insbesondere Höhenverstellungsantrieb, gemäß dem Stand der Technik vergleichsweise klein ausfällt. Dieser Form- und/oder Kraftschluss wird vorzugsweise zumindest teilweise wieder aufgehoben, sobald der Verstellungsantrieb, insbesondere Höhenverstellungsantrieb, wieder betätigt wird. Das Mittel, das die Relativbewegung zwischen dem Aktuator und dem Abtriebsteil zumindest zeitweise zumindest vermindert, wird vorzugsweise nur dann wirksam, wenn das Antriebsteil nicht betätigt wird und/oder während es in seine Neutralstellung überführt wird.

Figur 6 zeigt den erfindungsgemäßen Verstellungsantrieb, insbesondere Höhenverstellungsantrieb, in einer Explosionszeichnung, beziehungsweise einer Zusammenbaudarstellung. Es ist zu erkennen, dass das Mittel 15 drehfest mit dem Abtriebsteil verbunden ist und in dem vorliegenden Fall drei Arme aufweist, an denen jeweils hier zwei Form- und/oder Kraftschlussmittel 15.1 vorgesehen sind, die form- und/oder kraftschlüssig mit komplementären Form- und/oder Kraftschlussmitteln an dem Aktuator zusammenwirken.

Eine Ausführungsform dieser Form- und/oder Kraftschlussmittel 15.1 ist in Figur 7 dargestellt. In dem vorliegenden Fall handelt es sich um eine radial nach innen vorgesehene Ausbuchtung, die in der oberen Darstellung der Figur 7 nicht rastend mit dem Aktuator in Eingriff steht. Sobald sich jedoch der Aktuator relativ zu dem Mittel 15 und damit zu dem Abtriebsteil bewegt, gelangt das Form- und/oder Kraftschlussmittel 15.1 rastend in Eingriff mit einem Vorsprung an dem Aktuator, wodurch sich die Fangstellung 16 ergibt, die eine weitere Relativbewegung zwischen dem Abtriebsteil und dem Aktuator zumindest vermindert, insbesondere verhindert, was in der unteren Darstellung der Figur 7 dargestellt ist.

Figur 8 zeigt eine alternative Ausführungsform des Form- und/oder Kraftschlussmittels 15.1. Wiederum sind diese Form- und/oder Kraftschlussmittel Ausbuchtungen, die radial am Umfang des Mittels 15 vorgesehen sind, jedoch in dem vorliegenden Fall nach außen von der Drehachse des Verstellungsantriebs, insbesondere Höhenverstellungsantriebs, weg und nicht wie bei Figur 7 nach innen in Richtung der Drehachse weisen. Des Weiteren weist der Aktuator in dem vorliegenden Fall ein komplementäres Form- und/oder Kraftschlussmittel 3.1 auf, das rastend mit dem Form- und/oder Kraftschlussmittel 15.1 in Eingriff gelangt, sobald sich der Aktuator relativ zu dem Abtriebsteil bewegt.

Sowohl anhand von Figur 7 als auch anhand von Figur 8 ist zu erkennen, dass die Reduzierung der Relativbewegung in beiden Drehrichtungen, d. h. im als auch gegen den Uhrzeigersinn, wirkt.

### Bezugszeichenliste:

- 1: Verstellungsantrieb, Höhenverstellungsantrieb
- 2: Antriebsteil
- 3: Aktuator
- 3.1: Form- und/oder Kraftschlussmittel
- 4: antriebsseitige Wälzkörper, Kugel
- 5: Gehäuse
- 6: abtriebsseitige Wälzkörper
- 7: Kontakt zwischen dem Aktuator und dem abtriebsseitigen Wälzkörper
- 8: Zwischenelement antriebsseitig
- 9: --
- 10: Drehmomentübertragungsmittel
- 10.1: Form- und/oder Kraftschlussmittel am äußeren Umfang
- 10.2: Form- und/oder Kraftschlussmittel am inneren Umfang
- 11: Abtriebsteil
- 11.1: Form- und/oder Kraftschlussmittel
- 12: Kontakt zwischen dem Aktuator und dem Drehmomentübertragungsmittel
- 13: -
- 14: Spalt
- 15: Mittel, das die Relativbewegung zwischen dem Aktuator und dem Abtriebsteil zumindest zeitweise vermindert, Fangvorrichtung
- 15.1: Kraft- und/oder Formschlussmittel
- 16: Fangstellung

## Patentansprüche

1. Verstellungsantrieb (1), insbesondere Höhenverstellungsantrieb (1), eines Fahrzeugsitzes mit einem Antriebsteil (2), das mit einer Handhabe verbunden ist, und mit einem Abtriebsteil (11), das mit dem Versteller, insbesondere dem Höhenversteller, zusammenwirkt, wobei zwischen dem Antriebsteil (2) und dem Abtriebsteil (11) ein Aktuator (3) angeordnet ist, der von dem Antriebsteil (2) drehend angetrieben wird und seinerseits das Abtriebsteil (11) drehend antreibt, wobei zwischen dem Aktuator (3) und dem Abtriebsteil (11) ein Mittel (15) vorgesehen ist, das eine Relativbewegung zwischen dem Aktuator (3) und dem Abtriebsteil (11) zumindest zeitweise zumindest vermindert, **dadurch gekennzeichnet, dass**
- das Mittel (15) drei radial auswärts gerichtete Arme aufweist, an denen jeweils zwei Form- und/oder Kraftschlussmittel (15.1) vorgesehen sind, welche dazu ausgebildet sind, form- und/oder kraftschlüssig mit komplementären Form- und/oder Kraftschlussmitteln (3.1) an dem Aktuator (3) zusammenzuwirken oder
- das Mittel (15) sechs radial auswärts gerichtete Arme aufweist, an denen jeweils ein Form- und/oder Kraftschlussmittel (15.1) vorgesehen ist, welches dazu ausgebildet ist, form- und/oder kraftschlüssig mit komplementären Form- und/oder Kraftschlussmitteln an dem Aktuator (3) zusammenzuwirken.

2. Verstellungsantrieb (1), insbesondere Höhenverstellungsantrieb (1), nach Anspruch 1, **dadurch gekennzeichnet, dass** das Mittel (15) die Relativbewegung zwischen dem Aktuator (3) und dem Abtriebsteil (11) in zwei entgegengesetzte Drehrichtungen, insbesondere zeitweise, zumindest vermindert.

3. Verstellungsantrieb (1), insbesondere Höhenverstellungsantrieb (1), nach Anspruch 1 oder 2, **dadurch gekennzeichnet, dass** das Mittel (15) ein Federmittel ist, das vorzugsweise drehfest mit dem Abtriebsteil (11) verbunden ist.

4. Verstellungsantrieb (1), insbesondere Höhenverstellungsantrieb (1), nach einem der voranstehenden Ansprüche, **dadurch gekennzeichnet, dass** das Mittel (15) die Form- und/oder Kraftschlussmittel (15.1) in Form mehrerer Ein- und/oder Ausbuchtungen aufweist.

5. Verstellungsantrieb (1), insbesondere Höhenverstellungsantrieb (1), nach Anspruch 4, **dadurch gekennzeichnet, dass** jede Ein- und/oder Ausbuchtung (15.1) jeweils mit einer komplementären Ein- und/oder Ausbuchtung (3.1) an und/oder in dem Aktuator (3), insbesondere rastend, zusammenwirkt, wobei eine Rastung vorzugsweise durch die Relativbewegung zwischen dem Abtriebsteil (11) und dem Aktuator (3) erfolgt.

6. Verstellungsantrieb (1), insbesondere Höhenverstellungsantrieb (1), nach Anspruch 4 oder 5, **dadurch gekennzeichnet, dass** sich die Form- und/oder Kraftschlussmittel (15.1) am radialen inneren und/oder äußeren Umfang oder in axialer Richtung, jeweils bezogen auf die Drehachse des Abtriebsteils (11), an dem Mittel (15) befinden.

7. Verstellungsantrieb (1), insbesondere Höhenverstellungsantrieb (1), nach einem der voranstehenden Ansprüche, **dadurch gekennzeichnet, dass** das Mittel (15) ein Blechteil ist, das vorzugsweise gebogen und/oder gestanzt ist und das insbesondere aus einem federnden Stahl gefertigt ist.

8. Verstellungsantrieb (1), insbesondere Höhenverstellungsantrieb (1), nach einem der voranstehenden Ansprüche, **dadurch gekennzeichnet, dass** das Mittel (15) ein Reibschlussmittel ist, das zwischen dem Aktuator (3) und dem Abtriebsteil (11) wirkt.

## Claims

1. Adjusting drive (1), in particular height-adjusting drive (1), for a vehicle seat, having an input part (2), which is connected to a handle, and having an output part (11), which interacts with the adjuster, in particular the height adjuster, wherein an actuator (3) is arranged between the input part (2) and the output part (11), said actuator being driven in rotation by the input part (2) and, for its part, driving the output part (11) in rotation, wherein a means (15) which at least reduces a relative movement between the actuator (3) and the output part (11), at least temporarily, is provided between the actuator (3) and the output part (11), **characterized in that**
- the means (15) has three radially outwardly directed arms, on each of which two positive engagement and/or nonpositive engagement means (15.1) are provided, which are designed to interact positively and/or nonpositively with complementary positive engagement and/or nonpositive engagement means (3.1) on the actuator (3), or
- the means (15) has six radially outwardly directed arms, on each of which one positive engagement and/or nonpositive engagement means (15.1) is provided, which is designed to interact positively and/or nonpositively with complementary positive engagement and/or nonpositive engagement means on the actuator (3).

2. Adjusting drive (1), in particular height-adjusting drive (1), according to Claim 1, **characterized in that** the means (15) at least reduces the relative movement between the actuator (3) and the output part (11) in two opposite directions of rotation, in particular temporarily.

3. Adjusting drive (1), in particular height-adjusting drive (1), according to Claim 1 or 2, **characterized in that** the means (15) is a spring means, which is connected to the output part (11), preferably for conjoint rotation.

4. Adjusting drive (1), in particular height-adjusting drive (1), according to one of the preceding claims, **characterized in that** the means (15) has the positive engagement and/or nonpositive engagement means (15.1) in the form of a plurality of recesses and/or protrusions.

5. Adjusting drive (1), in particular height-adjusting drive (1), according to Claim 4, **characterized in that** each recess and/or protrusion (15.1) interacts with a complementary recess and/or protrusion (3.1) on and/or in the actuator (3), in particular by a latching action, wherein a latching action preferably takes place by the relative movement between the output part (11) and the actuator (3).

6. Adjusting drive (1), in particular height-adjusting drive (1), according to Claim 4 or 5, **characterized in that** the positive engagement and/or nonpositive engagement means (15.1) are situated on the radially inner and/or outer circumference or in an axial direction on the means (15), in each case relative to the axis of rotation of the output part (11) .

7. Adjusting drive (1), in particular height-adjusting drive (1), according to one of the preceding claims, **characterized in that** the means (15) is a sheet-metal part, which is preferably bent and/or stamped and, in particular, is manufactured from a spring steel.

8. Adjusting drive (1), in particular height-adjusting drive (1), according to one of the preceding claims, **characterized in that** the means (15) is a frictional engagement means, which acts between the actuator (3) and the output part (11).

## Revendications

1. Commande de réglage (1), en particulier commande de réglage en hauteur (1), d'un siège de véhicule avec une partie de commande (2), qui est reliée à une manette, et avec une partie de sortie (11), qui coopère avec le mécanisme de réglage, en particulier avec le mécanisme de réglage en hauteur, dans lequel un actionneur (3) est disposé entre la partie de commande (2) et la partie de sortie (11), qui est entraîné en rotation par la partie de commande (2) et entraîne à son tour la partie de sortie (11) en rotation, dans lequel il est prévu entre l'actionneur (3) et la partie de sortie (11) un moyen (15) qui au moins réduit, au moins temporairement, un mouvement relatif entre l'actionneur (3) et la partie de sortie (11), **caractérisée en ce que**
- le moyen (15) présente trois bras dirigés radialement vers l'extérieur, sur lesquels il est chaque fois prévu deux moyens d'assemblage par emboîtement et/ou par adhérence (15.1), qui sont configurés de façon à coopérer par emboîtement et/ou par adhérence avec des moyens d'assemblage par emboîtement et/ou par adhérence complémentaires (3.1) sur l'actionneur (3), ou
- le moyen (15) présente six bras dirigés radialement vers l'extérieur, sur lesquels il est chaque fois prévu un moyen d'assemblage par emboîtement et/ou par adhérence (15.1), qui est configuré de façon à coopérer avec des moyens d'assemblage par emboîtement et/ou par adhérence complémentaires (3.1) sur l'actionneur (3).

2. Commande de réglage (1), en particulier commande de réglage en hauteur (1), selon la revendication 1, **caractérisée en ce que** le moyen (15) au moins réduit, au moins temporairement, le mouvement relatif entre l'actionneur (3) et la partie de sortie (11) dans deux sens de rotation opposés.

3. Commande de réglage (1), en particulier commande de réglage en hauteur (1), selon une revendication 1 ou 2, **caractérisée en ce que** le moyen (15) est un moyen de ressort, qui est relié de préférence de façon calée en rotation à la partie de sortie (11).

4. Commande de réglage (1), en particulier commande de réglage en hauteur (1), selon l'une quelconque des revendications précédentes, **caractérisée en ce que** le moyen (15) présente les moyens d'assemblage par emboîtement et/ou par adhérence (15.1) sous la forme de creux et/ou de renflements.

5. Commande de réglage (1), en particulier commande de réglage en hauteur (1), selon la revendication 4, **caractérisée en ce que** chaque creux et/ou renflement (15.1) coopère respectivement, en particulier par encliquetage, avec un creux et/ou un renflement complémentaire (3.1) dans l'actionneur (3), dans laquelle un encliquetage est effectué de préférence par un mouvement relatif entre la partie de sortie (11) et l'actionneur (3).

6. Commande de réglage (1), en particulier commande de réglage en hauteur (1), selon une revendication 4 ou 5, **caractérisée en ce que** les moyens d'assemblage par emboîtement et/ou par adhérence (15.1) se trouvent sur le moyen (15) sur la périphérie radialement intérieure et/ou extérieure ou en direction axiale, chaque fois par rapport à l'axe de rotation de la partie de sortie (11) .

7. Commande de réglage (1), en particulier commande de réglage en hauteur (1), selon l'une quelconque des revendications précédentes, **caractérisée en ce que** le moyen (15) est une pièce de tôle, qui est de préférence pliée et/ou découpée et qui est fabriquée en particulier en un acier à ressort.

8. Commande de réglage (1), en particulier commande de réglage en hauteur (1), selon l'une quelconque des revendications précédentes, **caractérisée en ce que** le moyen (15) est un moyen d'assemblage par friction, qui agit entre l'actionneur (3) et la partie de sortie (11) .
